# EUROPEAN PATENT APPLICATION

(11) **EP 4 626 126 A1**
(43) Date of publication of application: **01.10.2025**
(21) Application number: 23893418.6
(22) Date of filing: 26.09.2023
(51) Int. Cl.: H04W 76/10

(54) **NETWORK RELAY METHOD, SYSTEM, COMPUTER DEVICE, AND READABLE STORAGE MEDIUM**

(30) Priority: 25.11.2022 CN 202211490011
(71) Applicant: Autoflight (Kunshan) Co., Ltd., Suzhou, Jiangsu 215345 (CN)
(72) Inventor: TIAN, Yu, Suzhou, Jiangsu 215345 (CN); XU, Taoping, Suzhou, Jiangsu 215345 (CN)
(74) Representative: MERH-IP Matias Erny Reichl Hoffmann Patentanwälte PartG mbB
(86) International application number: PCT/CN2023/121456
(87) International publication number: WO 2024/109326

(57) **Abstract**

This invention relates to the field of communication technology, providing a network relay method, a system, a computer device and a readable storage medium, comprises: establishing a wireless communication connection to an unmanned aerial vehicle; identifying at least one public network, and setting the public network conforming to preset network rules as a target network; establishing a communication connection to the target network; establishing a wireless communication connection to the UAV to realize the communication connection between the UA V and the target network. This invention enables the UAV to obtain network services provided by the public network in areas that are difficult to be covered by the public network, thus greatly expanding the working range of the UAV.

## Description

### FIELD OF THE DISCLOSURE

This invention relates to the field of communication technology, in particular to a network relay method, a system, a computer device and a readable storage medium.

### BACKGROUND OF THE INVENTION

At present, the control terminal used in the wild usually adopts the public network (e.g. 4G and 5G network), however, due to the complexity of the environment in the wild and the high flight altitude of the UAV, there are many invalid signal areas in the wild that cannot be covered by the public network, or the signal of the public network is very weak. When the UAV flies to a certain altitude, it will enter the high-altitude area that is difficult to be covered by the public network. As a result, the control terminal cannot control the UAV in the invalid signal area or the high altitude area through the public network, which greatly restricts the working range of the UAV.

### SUMMARY OF THE INVENTION

This invention provides a network relay method, a system, a computer device and a readable storage medium to solve the problem that the UAV cannot enter the invalid signal area or the high altitude area through the public network, which greatly limits the working range of the UAV.

First, this invention provides a network relay method comprising:
identifying at least one public network, and setting the public network conforming to preset network rules as a target network;
establishing a communication connection to the target network;
establishing a wireless communication connection to a UAV to realize the communication connection between the UAV and the target network.

In the above scheme, the public network comprises at least one of the following: a 4G network, a 5G network, a wireless network and a wired network.

In the above scheme, setting the public network conforming to the preset network rules as a target network comprises:
inputting at least one network name of at least one public network into a preset network queue;
executing a locking process on the network queue to set any network name in the network queue as a name to be evaluated, and setting the public network corresponding to the name to be evaluated as a network to be evaluated;
inserting a network valid label into the name to be evaluated corresponding to the network to be evaluated that conforms to the network rules, or inserting a network invalid label into the name to be evaluated corresponding to the network to be evaluated that does not conform to the network rules;
executing the locking process and network testing process successively to the network names in the network queue, so that each network name in the network queue gets the network valid label or the network invalid label;
setting the public network inserted with a valid network label in the network queue as the target network.

In the above scheme, inserting the network valid label into the name to be evaluated corresponding to the network to be evaluated that conforms to the network rules comprises:
if it is determined that the signal strength of the network to be evaluated reaches the strength threshold in the network rules, and
the network speed of the network to be evaluated reaches the rate threshold in the network rule, and
the network latency of the network to be evaluated is less than the delay threshold in the network rules, inserting the network valid label into the name to be evaluated corresponding to the network to be evaluated.

Inserting a network invalid label into the name to be evaluated corresponding to the network to be evaluated that does not conform to the network rules comprises:
if it is determined that the signal strength of the network to be evaluated does not reach the strength threshold in the network rules, and/or
the network speed of the network to be evaluated does not reach the rate threshold in the network rules, and/or
if the network latency of the network to be evaluated is greater than or equal to the delay threshold in the network rules, inserting the network invalid label into the name to be evaluated corresponding to the network to be evaluated.

In the above scheme, establishing a communication connection to the target network comprises:
inputting the network name of the target network into a preset directory template so that the directory template is converted into a network directory;
sending the network directory to a control terminal, receiving the network name selected by the control terminal in the network directory, and establishing a communication connection to the target network corresponding to the selected network name.

In the above scheme, establishing a wireless communication connection to the UAV comprises:
scanning for at least one terminal device in a preset coverage area;
identifying a UAV that is among the terminal devices and retrieve a device name of the UAV;
inputting the device name into a preset directory template to generate a numbered directory, and transmitting the numbered directory to a control terminal connected to the target network, wherein the control terminal serves as a terminal for the UAV;
receiving the device name selected by the control terminal in the numbered directory and establishing a communication connection to the UAV corresponding to the selected device name.

Second, the invention provides a network relay system comprising: a wireless communication module, a network interface card module and a repeater module, the wireless communication module is connected to the repeater module, the repeater module is connected to the network interface card module.

The network interface card module is used to identify at least one public network and set the public network conforming to preset network rules as a target network.

The repeater module is used to establish a communication connection to the target network.

The wireless communication module is used to establish a wireless communication connection to a UAV to realize the communication connection between the UAV and the target network.

In the scheme, the repeater module establishes a network connection to the public network via wireless network devices or wired network devices. The wireless communication module establishes a wireless communication connection to a wireless device of the UAV. The repeater module is connected to the wireless communication module through a serial port device, or a CAN bus, or a network port device.

Third, the invention provides a computer device comprising a processor and a memory communicatively connected with the processor.

The memory stores computer executable instructions.

The processor executes the computer executable instructions stored in the memory to implement the network relay method as described above.

Fourthly, this invention provides a computer-readable storage medium, the computer-readable storage medium stores computer executable instructions, which are used to implement the above network relay method when executed by the processor.

A network relay method, a system, a computer device and a readable storage medium provided in this invention can greatly expand the flight range of the UAV by establishing a wireless communication connection to the UAV, while the UAV can fly without constraints.

By identifying at least one public network to scan all the presently available networks around, so as to expand the options for providing network services for the UAV subsequently. Setting the public network that conforms to the preset network rules as the target network. If so, setting the public network that conforms to the network rules as the target network. If not, no network information is generated. By filtering the identified public network to retrieve the public network that conforms to the network rules, thereby ensuring the reliability of subsequent network services for the UAV.

By establishing a communication connection to the target network to realize the communication connection between the UAV and the target network, by providing the network service of the target network for the UAV, so that the UAV in areas that are difficult to be covered by the public network (such as: Signal invalid areas with weak public network signal and/or no public network signal, as well as high-altitude areas) can still obtain network services provided by a public network, thus greatly expanding the working range of the UAV.

### BRIEF DESCRIPTION OF DRAWINGS

The drawings herein are incorporated into and form part of the specification, show embodiments in conformity with the invention and are used in conjunction with the specification to explain the rationale of the invention.
Figure 1 provides a schematic diagram of an invention scenario according to an embodiment of the present invention.
Figure 2 provides a flowchart of embodiment 1 of a network relay method according to an embodiment of the present invention.
Figure 3 is a schematic diagram of a program module between a network relay system provided by the invention and an UAV, a target network and a control device.
Figure 4 is a hardware structure diagram of the computer device in the invention.

### Attached drawing marks:

1: network relay system; 2: control device; 3: UAV; 4: target network; 5: control terminal; 6: computer device; 11: wireless communication module; 12: network interface card module; 13: repeater module; 62: processor; 61: Memory.

Explicit embodiments of this invention have been shown by the drawings attached above and are described in more detail below. These drawings and descriptions are not intended in any way to limit the scope of the idea of this invention, but rather to illustrate the concept of this invention for a skilled person in the field by referring to specific embodiments.

### DETAILED DESCRIPTION

Illustrative embodiments are described in detail here, as exemplified in the attached figures. Where the description below relates to attached drawings, the same numbers in different attached drawings indicate the same or similar elements unless otherwise indicated. The embodiments described in the following exemplary embodiments do not represent all embodiments consistent with this invention. Rather, they are merely examples of devices and methods that are consistent with aspects of this invention as detailed in the attached claims.

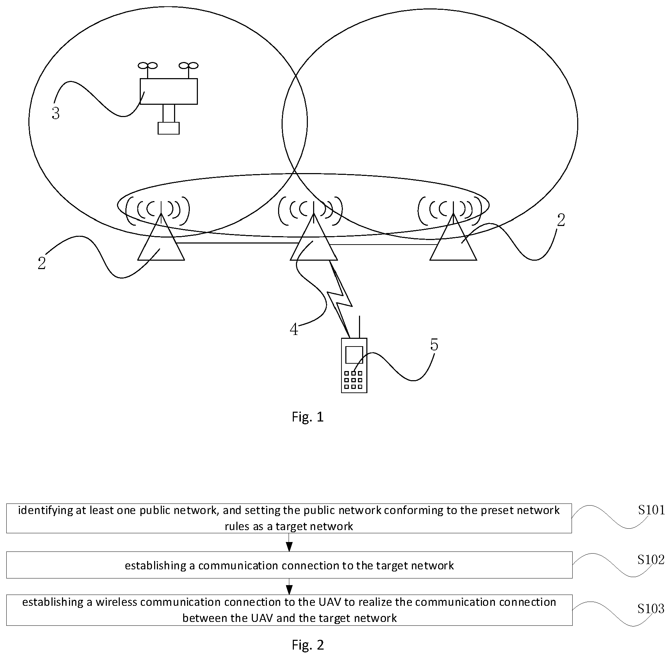

Please refer to Figure 1, the specific invention scenarios of this invention are:
Run the control device 2 with the network relay method, and install the control device 2 near the signal invalid area where the public network signal can be received, or below the high-altitude area. Control device 2 is configured to identify at least one public network and to check whether any public network conforms with preset network rules. If so, setting the public network conforming to the network rules as target network 4, and establishing a wireless communication connection between the control device 2 and the target network 4. Control device 2 is connected to a UAV 3, and a control terminal 5 for the UAV 3 is connected to the target network 4, so that the UAV 3 can connect to the control terminal 5 through the target network 4. This invention realizes a public communication channel between the UAV 3 and its control terminal 5 through the control device 2, namely, target network 4 and wireless communication connection, which can transmit multiplex communication for transmitting multiple non-correlated signals.

The method of data transmission provided in this invention is intended to solve the above technical problems of the prior art.

The following are specific embodiments of the technical scheme of this invention and how the technical scheme of this invention solves the above technical problems. The following specific embodiments may be combined with each other, and the same or similar concepts or processes may not be repeated in some embodiments. Embodiments of this invention are described below in conjunction with the attached drawings.

### Embodiment 1:

Refer to Figure 2, this invention provides a network relay method that comprises:
S101: Identifying at least one public network and setting the public network conforming to the preset network rules as a target network.

In this step, by identifying at least one public network to scan all the presently available networks around, so as to expand the options for providing network services for the UAV subsequently. Setting the public network that conforms to the preset network rules as the target network. If so, setting the public network that conforms to the network rules as the target network. If not, no network information is generated. By filtering the identified public network to retrieve the public network that conforms to the network rules, thereby ensuring the reliability of subsequent network services for drones.

In this embodiment, the public network comprises at least one of the following: a 4G network, a 5G network, a wireless network and a wired network.

The 4G signal sent by the 4G base station and the 5G signal sent by the 5G base station and the wireless network signal are scanned by the wireless network interface card to identify the 4G network, the 5G network and the wireless network.

4G network is based on the network signal generated by the fourth generation communication technology, which is based on 2G and 3G communication technology. Some new technologies are added to make the wireless communication signal more stable, improve the data transmission rate, and the compatibility is smoother, and the communication quality is also higher.

5G network is based on the network signals generated by the fifth Generation Communication Technology. The 5th Generation Mobile Communication Technology (5G) is a new generation of broadband mobile communication technology featuring high speed, low delay and large connection. 5G communication facilities are the network infrastructure to realize the Human-Machine-Things Interconnection.

The so-called wireless network refers to the network that can realize the interconnection of various communication devices without wiring. Wireless network technologies range from global voice and data networks that allow users to establish wireless connections over long distances to infrared and radio-frequency technologies optimized for close-range wireless connections.

The wired network is scanned through the wired network card, wherein the wired network is a computer network connected by coaxial cable, twisted pair and optical fiber. Coaxial cable network is a common way of networking.

In a preferred embodiment, setting the public network conforming to the preset network rules as a target network, comprises:
S11: Inputting at least one network name of at least one public network into a preset network queue.

In this step, since more than one public network is detected, therefore, in order to ensure that the process of checking whether the public network conforms to the network rules can be carried out in an orderly manner, inputting the network names of the public networks into the network queue, in order to evaluate the public networks according to the network names in the network queue subsequently, thus ensuring an orderliness of the public network evaluation.

S12: Executing a locking process on the network queue to set any network name in the network queue as a name to be evaluated, and setting the public network corresponding to the name to be evaluated as the network to be evaluated.

In this step, by locking the process to lock one public network as the network to be evaluated, and other public networks are in the standby state to ensure the orderly execution of the network testing process on the public network.

S13: Inserting a network valid label into the name to be evaluated corresponding to the network to be evaluated that conforms to the network rules, or inserting a network invalid label into the name to be evaluated corresponding to the network to be evaluated that does not conform to the network rules.

In this step, evaluating the network to be evaluated according to network rules through the network testing process. If the network to be evaluated conforms to the network rules, inserting the network valid label. If the network to be evaluated does not conform to the network rules, inserting the network invalid label, so as to ensure that the scanned public network can reliably provide network services to the UAV. Specifically, executing the network testing process on the network to be evaluated to determine whether the network to be evaluated conforms to the network rules. If so, the network to be evaluated is determined to be a public network conforming to the network rules, and the network valid label is inserted into the name to be evaluated. If not, the network to be evaluated is determined to be a public network that does not conform to the network rules, and the network invalid label is inserted into the name to be evaluated.

Further, inserting a network valid label into the name to be evaluated corresponding to the network to be evaluated that conforms to the network rules, comprises:
If it is determined that the signal strength of the network to be evaluated reaches the strength threshold in the network rules, and
the network speed of the network to be evaluated reaches the rate threshold in the network rule, and
the network latency of the network to be evaluated is less than the delay threshold in the network rule, inserting the network valid label into the name to be evaluated corresponding to the network to be evaluated.

Further, inserting a network invalid label into the name to be evaluated corresponding to the network to be evaluated that does not conform to the network rules, comprises:
If it is determined that the signal strength of the network to be evaluated does not reach the strength threshold in the network rules, and/or
the network speed of the network to be evaluated does not reach the rate threshold in the network rules, and/or
the network latency of the network to be evaluated is greater than or equal to the delay threshold in the network rules, inserting the network invalid label into the name to be evaluated corresponding to the network to be evaluated.

Specifically, the specific methods for inserting a network valid label into the name to be evaluated corresponding to the network to be evaluated that conforms to the network rules, or inserting a network invalid label into the name to be evaluated corresponding to the network to be evaluated that does not conform to the network rules, comprises:
S131: Determine whether the signal strength of the network to be evaluated reaches the strength threshold in the network rules;
   If the strength threshold is reached, the network to be evaluated is determined to be a strength-compliant network;
   If the strength threshold is not reached, the network to be evaluated is determined to be a public network that does not conform to the network rules.
S132: Determine whether the network speed of the strength-compliant network reaches the rate threshold in the network rules;
   If the rate threshold is reached, the strength reaching network is determined to be a rate-compliant network.
   If the rate threshold is not reached, the network that reaches the strength threshold is determined to be a public network that does not conform to the network rules.
S133: Determine whether the network latency of the network reaching the rate is less than the delay threshold in the network rule;

If it is less than the delay threshold, the network reaching the rate is determined to be a public network conforming to the network rules.

If it is not less than the delay threshold, the network that reaches the rate is determined to be a public network that does not conform to the network rules.

In this embodiment, the network to be evaluated is evaluated through three dimensions of signal strength, network speed and network latency, so as to ensure that the finally retrieved public network with the inserted network valid label can provide the UAV with network services that meet the requirements of the intensity threshold, rate threshold and delay threshold in the network rules.

In this embodiment, the signal strength refers to the signal strength used by the device, includes:
RF Transmit Power: indicates the RF Transmit Power of the AP terminal and the RF Transmit Power of the wireless terminal.
EIRP: Effective Isotropic Radiated Power (EIRP), the intensity of the signal transmitted from the antenna.
RSSI: Received Signal Strength Indicator (RSSI) indicates the signal strength of a location within the wireless network coverage. It is the value of the EIRP after a period of transmission path loss and obstacle attenuation.
Downlink signal strength: indicates the signal strength of the AP received by the wireless terminal.
Uplink signal strength: indicates the signal strength received by the AP from the wireless terminal.

Network speed is the amount of time it takes to request and return data when uploading and downloading it.

Network latency refers to the time when various types of data are transmitted through network protocols (such as TCP/IP) on network media. If the amount of information is too large, the device will respond slowly due to excessive network traffic, resulting in network latency.

S14: Execute the locking process and the network testing process successively on the network names in the network queue so that each network name in the network queue is given a network valid label or a network invalid label.

In this step, by executing the network testing process on all the public networks corresponding to network names in the network queue with the above methods to ensure the comprehensiveness of the network rule-based evaluation of the obtained public networks.

S15: Setting the public network inserted with a valid network label in the network queue as the target network.

Specifically, determine whether the network queue has a network name inserted with a network valid label.

If so, it is determined that there is a public network conforming to the network rules in the public network.

If not, it is determined that there is no public network that conforms to the network rules in the public network.

S102: Establishing a communication connection to the target network.

In this step, by establishing a communication connection to the target network to realize the communication connection between the UAV and the target network, by providing the network service of the target network for the UAV, so that the UAV in areas that are difficult to be covered by the public network (such as: Signal invalid areas with weak public network signal and/or no public network signal, as well as high-altitude areas) can still obtain network services provided by a public network, thus greatly expanding the working range of the UAV.

In a preferred embodiment, establishing a communication connection to the target network, comprises:
S31: Inputting the network name of the target network into the preset directory template so that the directory template is converted into a network directory.

In this step, a network directory is generated to summarize all public networks conforming to the network rules, so that the control terminal can select the target network it needs.

S32: Sending the network directory to the control terminal, receiving the network name selected by the control terminal in the network directory, and establishing a communication connection to the target network corresponding to the selected network name.

In this step, by connecting to the target network selected by the control terminal, the selectivity of the network connection is ensured.

S103: Establishing a wireless communication connection to the UAV to realize a communication connection between the UAV and the target network.

In this step, by establishing a wireless communication connection to the UAV, the flight range of the UAV is greatly expanded while the UAV can fly without constraints.

In a preferred embodiment, establishing a wireless communication connection with the UAV, comprises:
S31: Scanning for at least one terminal device in the preset coverage area.

In this step, the wireless communication module scans the wireless device of the terminal devices in the covered area to identify the terminal devices in the covered area, so that the operator can place the UAV in any place within the covered area, namely, the devices can be scanned, and without operating the UAV to search for the network relay system, which improves the convenience of scanning and identifying the UAV.

Wherein, the coverage area refers to the wireless network coverage range of the wireless communication module, and the coverage area can be set according to the power of the wireless communication module.

S32: Identifying a UAV that is among the terminal devices and retrieving the device name of the UAV.

In this step, determine whether there is a UAV among the terminal devices to accurately identify the target for wireless communication connection, so as to avoid invalid connection to other terminal devices. Specifically, determine whether there is at least one UAV among the terminal devices. If so, receiving at least one device name of the UAV. If not, generating no device information and sending the no device information to the control terminal.

Further, determining whether there is at least one UAV among the terminal devices, comprises:
receiving the device name of the terminal device and determining whether there is a field indicating that the object is a UAV.

If the field is provided, the terminal device corresponding to the device name is a UAV.

If the field is not provided, it is determined that the terminal device corresponding to the device name is not a UAV.

Wherein, the fields can be configured as needed.

S13: Inputting the device name into the preset directory template to generate a numbered directory, and transmitting the numbered directory to the control terminal connected to the target network, wherein the control terminal serves as a terminal for the UAV.

Receiving the device name selected by the control terminal in the numbered directory and establishing a communication connection to the UAV corresponding to the selected device name.

In this step, by sending the numbered directory with the device name to the control terminal so that the control terminal can select the UAV that it needs to connect, thus realizing the object accuracy and controllability of wireless communication connection to the UAV.

### Embodiment 2:

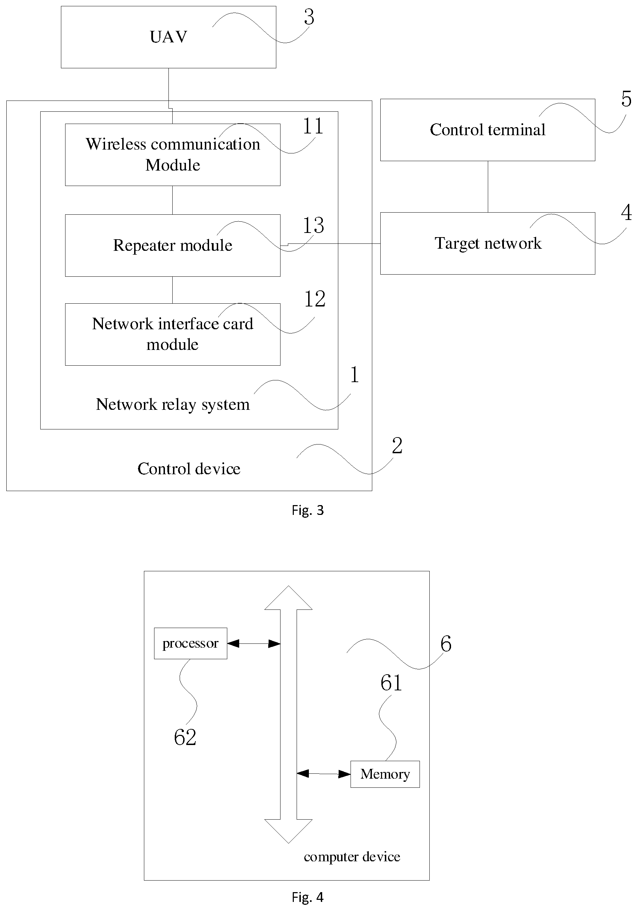

Please refer to Figure 3, this invention provides a network relay system 1, which is installed in the control device 2 and comprises: a wireless communication module 11, a network interface card module 12 and a repeater module 13. The wireless communication module 11 is connected to the repeater module 13, and the repeater module 13 is connected to the network interface card module 12.

The network interface card module 12 is used to identify at least one public network, and set the public network conforming to the preset network rules as the target network 4.

The repeater module 13 is used to establish a communication connection to the target network 4.

The wireless communication module 11 is used to establish a wireless communication connection to the UAV 3 to realize the communication connection between the UAV 3 and the target network 4.

In this embodiment, the network coverage range of the wireless communication module 11 can be adjusted by selecting wireless communication module 11 with different power and network coverage range, and then the network signal generated by the wireless communication network can be covered in the signal invalid area where the public network signal is weak and/or there is no public network signal. And coverage of network signals in high-altitude areas where public network signals cannot reach.

Preferably, the repeater module 13 is connected with the public network through a wireless network device or a wired network device, the wireless communication module 11 and the wireless device of the UAV 3 to establish a wireless communication connection, the repeater module 13 is connected with the wireless communication module 11 through a serial port device, or CAN bus, or network port device.

In this embodiment, the wireless communication module 11 transmits or receives electromagnetic wave signals and converts them into information in a preset form, so as to connect the wireless communication circuit between objects.

Wireless device refers to radio communication device, which uses radio waves to transmit information for external communication and is composed of transmitter, receiver, antenna, feeder and corresponding terminal device.

Serial port device: Serial port device networking server, serial port server for short. It can connect RS-232/485/422 serial port device to TCP/IP network to realize two-way data transmission between RS-232/485/422 serial port and TCP/IP network interface, so that the serial port device can have networking function.

CAN bus is short for Controller Area Network (CAN) device, CAN bus is a serial communication network, has the advantages of reliability, real-time and flexible. The CAN bus structure is divided into two layers: the physical layer and the data link layer (including the logical link control sublayer LLC and the media access control sublayer MAC).

Network port device refers to the network interface, including a variety of interfaces of network device, the various interfaces are Ethernet interfaces, the Ethernet interface types are RJ-45 interface, RJ-11 interface, SC fiber interface, FDDI interface, AUI interface, BNC interface, Console interface.

### Embodiment 3:

For the purpose above, the invention further provides a computer device 6, comprising a processor 62 and a memory 61 communicating with the processor 62. The memory 61 stores computer executable instructions.

The processor 62 executes the computer executable instructions stored in the memory 61 to realize the network relay method, wherein the components of the network relay system can be dispersed among different computer device. Computer device 6 can be smart phones, tablets, laptops, desktop computers, rack servers, blade servers, tower servers, or cabinet servers (including standalone servers or a cluster of multiple invention servers) that execute programs. The computer device in this embodiment at least comprises but is not limited to: memory 61 and processor 62 that can communicate with each other through the system bus, as shown in Figure 4. It is important to note that Figure 4 shows only the computer device with components, but it should be understood that it is not required to implement all of the components shown, and that more or fewer components could be implemented instead. In this embodiment, memory 61 (readable storage medium) includes flash memory, hard disk, multimedia card, card type memory (e.g., SD or DX memory, etc.), Random access memory (RAM), static random access memory (SRAM), Read only memory (ROM), electrically erasable programmable Read Only memory (EEPROM), programmable Read Only memory (PROM), magnetic memory, disk, compact disc, etc. In some embodiments, memory 61 May be the internal storage unit of a computer device, such as the hard disk or memory of that computer device. In other embodiments, a memory 61 may also be an external storage device for a computer device, such as a plug-in hard disk, a Smart Media Card (SMC), a Secure Digital (SD) card, a plug-in hard disk equipped with the computer device, a Flash Card, etc. Of course, memory 61 can also comprise both the internal storage unit of a computer device and its external storage devices. In this embodiment, memory 61 is usually used to store the operating system and various invention software installed in the computer device, such as the program code of the network relay system in Embodiment 3. In addition, memory 61 can be used to temporarily store various types of data that have been or will be output. Processor 62 in some embodiments may be a Central Processing Unit (CPU), controller, microcontroller, microprocessor, or other data processing chip. The processor 62 is typically used to control the overall operation of computer device. In this embodiment, processor 62 is used to run the program code stored in memory 61 or process data, such as running a network relay system to realize the network relay method in the above embodiment.

The above integrated modules in the form of software functional modules can be stored in a computer readable storage medium. The software function modules are stored in a storage medium and include instructions to cause a computer device (which may be a personal computer, server, or network device, etc.) or processor to perform some of the steps of the method described in the embodiments of this invention. It should be understood that these processors can be Central Processing units (CPUs), other general-purpose processors, Digital Signal processors, DSP), invention Specific Integrated Circuit (ASIC), etc. A general-purpose processor can be a microprocessor or the processor can be any conventional processor, etc. The steps in combination with the methods disclosed in the invention may be performed directly by a hardware processor or by a combination of hardware and software modules in the processor. The memory may include high-speed RAM memory, or it may also include non-volatile storage NVMS, such as at least one disk memory, which can also be a USB flash drive, portable hard drive, read-only memory, disk, or compact disc.

A computer readable storage medium such as flash memory, hard disk, multimedia card, card-type memory (e.g., SD or DX memory, etc.), random access memory (RAM), static random access memory (SRAM), read-only memory (ROM), electrically erasable programmable Read only memory (EEPROM), programmable Read only memory (PROM), magnetic memory, disk, CD, server, App store, etc., There are computer executable instructions stored on it, the program is executed by the processor 62 to achieve the corresponding function. The computer readable storage medium of the embodiment is used to store the computer executable instructions implementing the network relay method, and the network relay method of the embodiment is realized when executed by processor 62.

The above storage medium may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), Magnetic memory, flash memory, disk or optical disc. The storage medium may be any available medium accessible to a general-purpose or special-purpose computer.

An exemplary storage medium is coupled to the processor so that the processor can read information from and write information to the storage medium. Of course, the storage medium can also be part of the processor. Processors and storage media can be located in invention Specific Integrated Circuits, or ASics. Of course, processors and storage media can also exist as discrete components in electronic devices or master devices.

This invention provides a computer program product, comprising a computer program, which implements the network relay method described above when executed by a processor.

It should be noted that, for purposes of this article, the term "comprise", "includes" or any other variation thereof is intended to cover non-exclusive inclusion so that a process, method, article or device that includes a set of elements includes not only those elements but also other elements not explicitly listed, Or include elements inherent to the process, method, object, or device. In the absence of further restrictions, the statement "including a... A limited element does not preclude the existence of another identical element in a process, method, article or device that includes the element.

After consideration of the specification and practice of the invention disclosed herein, a person skilled in the field will readily think of other implementations of this invention. This invention is intended to cover any variation, use or adaptation of this invention that follows the general principles of this invention and includes common knowledge or customary technical means in the field of technology not disclosed in this invention. The specification and embodiments are deemed to be of an exemplary nature only, and the true scope and spirit of this invention are indicated by the claims below.

It should be understood that this invention is not limited to the precise structure described above and shown in the attached drawings and is subject to various modifications and changes within its scope. The scope of this invention is limited only by the attached claims.

## Claims

1. A network relay method, comprising:
identifying at least one public network, and setting the public network conforming to the preset network rules as a target network;
establishing a communication connection to the target network;
establishing a wireless communication connection to the UAV to realize the communication connection between the UAV and the target network.

2. The network relay method according to claim 1, wherein the public network comprises at least one of the following: 4G network, 5G network, wireless network and wired network.

3. The network relay method according to claim 1, wherein the setting the public network conforming to the preset network rules as a target network comprises:
inputting at least one network name of at least one public network into a preset network queue;
executing a locking process on the network queue to set any network name in the network queue as a name to be evaluated, and setting the public network corresponding to the name to be evaluated as the network to be evaluated;
inserting a network valid label into the name to be evaluated corresponding to the network to be evaluated that conforms to the network rules, or inserting a network invalid label into the name to be evaluated corresponding to the network to be evaluated that does not conform to the network rules;
executing a locking process and a network testing process successively to the network name in the network queue, so that each network name in the network queue gets the network valid label or the network invalid label;
setting the public network inserted with a valid network label in the network queue as the target network.

4. The network relay method according to claim 3, the inserting the network valid label into the name to be evaluated corresponding to the network to be evaluated that conforms to the network rules comprises:
if it is determined that the signal strength of the network to be evaluated reaches the strength threshold in the network rules, and
the network speed of the network to be evaluated reaches the rate threshold in the network rule, and
the network latency of the network to be evaluated is less than the delay threshold in the network rules, inserting the network valid label into the name to be evaluated corresponding to the network to be evaluated;
the inserting a network invalid label into the name to be evaluated corresponding to the network to be evaluated that does not conform to the network rules comprises:
if it is determined that the signal strength of the network to be evaluated does not reach the strength threshold in the network rules, and/or
the network speed of the network to be evaluated does not reach the rate threshold in the network rules, and/or
if the network latency of the network to be evaluated is greater than or equal to the delay threshold in the network rules, inserting the network invalid label into the name to be evaluated corresponding to the network to be evaluated.

5. The network relay method according to claims 1-4, the establishing a communication connection to the target network comprises:
inputting the network name of the target network into the preset directory template so that the directory template is converted into a network directory;
sending the network directory to the control terminal, receiving the network name selected by the control terminal in the network directory, and establishing a communication connection to the target network corresponding to the selected network name.

6. The network relay method according to claims 1-4, the establishing a wireless communication connection to the UAV comprises:
scanning for at least one terminal device in the preset coverage area;
identifying the UAV within the terminal device and retrieve the device name of the UAV;
inputting the device name into the preset directory template to generate a numbered directory,
and transmitting the numbered directory to the control terminal connected to the target network,
wherein the control terminal serves as a terminal for the UAV;
receiving the device name selected by the control terminal in the numbered directory and
establishes a communication connection to the UAV corresponding to the selected device name.

7. A network relay system, comprising: a wireless communication module, a network interface card module and a repeater module, the wireless communication module is connected to the repeater module, the repeater module is connected to the network interface card module;
The network interface card module is used to identify at least one public network and set the public network conforming to the preset network rules as the target network;
The repeater module is used to establish a communication connection to the target network;
The wireless communication module is used to establish a wireless communication connection to the UAV to realize the communication connection between the UAV and the target network.

8. The network relay system according to claim 7, wherein the repeater module establishes network connection to the public network via wireless network devices or wired network devices, The wireless communication module establishes a wireless communication connection to a wireless device of the UAV. The repeater module is connected to the wireless communication module through the serial port device, or CAN bus, or network port device.

9. A computer device, comprising: a processor and a memory communicated with the processor;
The memory stores computer to execute instructions;
The processor executes the computer execution instructions stored in the memory to implement the network relay method described in either of claims 1 to 6.

10. A computer-readable storage medium, **characterized in that** the medium stores computer-executable instructions which, when executed by a processor, implement the network relay method according to any one of claims 1 to 6.
